(19) Europäisches Patentamt
European Patent Office
Office européen des brevets

(11) **EP 2 378 263 B1**

(12) **EUROPÄISCHE PATENTSCHRIFT**

(45) Veröffentlichungstag und Bekanntmachung des Hinweises auf die Patenterteilung:
**03.12.2014  Patentblatt 2014/49**

(51) Int Cl.:
***G01M 1/12*** *(2006.01)*    ***G01M 17/08*** *(2006.01)*

(21) Anmeldenummer: **11003116.8**

(22) Anmeldetag: **13.04.2011**

(54) **System und Verfahren zur Ermittlung des Masseschwerpunks bei Schienenfahrzeugen**

System and method for determining the centre of gravity of rail vehicles

Système et procédé de détermination du centre de gravité de la masse dans des véhicules sur rails

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2010  DE 102010015571**

(43) Veröffentlichungstag der Anmeldung:
**19.10.2011  Patentblatt 2011/42**

(73) Patentinhaber: **Schenck Process GmbH 64293 Darmstadt (DE)**

(72) Erfinder:
• **Müller, Ralph**
  **64291 Darmstadt (DE)**
• **Groll, Peter**
  **64297 Darmstadt (DE)**

(56) Entgegenhaltungen:
**EP-A1- 1 607 726    EP-A1- 2 090 874
WO-A1-88/06720**

**Beschreibung**

Die Erfindung betrifft allgemein das technische Gebiet von Schienenfahrzeugen sowie ein System zur Ermittlung der Lage des Masseschwerpunkts von Schienenfahrzeugen. Die vorliegende Erfindung betrifft insbesondere ein System sowie ein Verfahren zur Lokalisierung des Masseschwerpunkts von Schienenfahrzeugen durch Erfassung von Belastungen, die im Rad/Schiene-Kontakt bei Schienenfahrzeugen auftreten.

Es sind bereits Systeme bekannt, bei denen an einer Schiene eine Messstrecke eingerichtet ist, wie z.B. aus der Druckschrift DE 10 2006 015 924 A1. Bei diesen Systemen nach dem Stand der Technik sind unter den Schienen mehrere Messvorrichtungen in Schienenlängsrichtung angeordnet, welche die auf die Schiene einwirkenden Kräfte erfassen. Mittels der Messvorrichtungen können die bei der Überfahrung der Messstrecke durch das Schienenfahrzeug entstehende Kräfte oder Momente im Gleiskörper gemessen werden.

Solche bekannten Systeme beschränken sich jedoch darauf, die im Gleiskörper auftretenden Kräfte oder Momente bei einfacher Geradeausfahrt des Schienenfahrzeugs auf einem ebenen Schienenstrang zu messen. Solche Messschienen ermöglichen nur eine eingeschränkte Diagnose bestimmter Eigenschaften des Schienenfahrzeugs oder von dessen Fahrwerk und lassen keine Ermittlung des Masseschwerpunkts des Schienenfahrzeugs zu.

Weiterhin ist aus der WO 88/06720 A1 ein Verfahren und eine Vorrichtung zur Bestimmung der räumlichen Schwerpunktlage von Containern bekannt, wobei bei einer ersten Messung an vier Aufstandspunkten des Containers die auftretenden Kräfte gemessen werden, anschließend der Container aus der Ausgangslage in eine definierte Position verkippt und in einer zweiten Messung die an den Aufstandspunkten des verkippten Containers auftretenden Kräfte gemessen und aus den Messwerten die Schwerpunktlage berechnet wird.

Außerdem ist aus der EP 1 607 726 A1 ein Verfahren und eine Vorrichtung zur Messung von Schienenfahrzeugdaten bekannt, wobei eine Anzahl von Sensoren in die Schienen und eine Anzahl von Sensoren zwischen Schienen und Schwellen angeordnet sind, mit denen die auf die Schienen wirkenden Kräfte aus einem Schienenfahrzeug innerhalb der durch die Sensoren definierten Messstrecke bestimmt und ausgewertet werden können.

In der Praxis besteht jedoch ein hoher Bedarf an einer Vorrichtung zum Ermitteln der Lage des Masseschwerpunkts von Schienenfahrzeugen, beispielsweise um eine gleichmäßige Beladung des Schienenfahrzeugs zu überprüfen oder ggf. korrigieren zu können. Dabei sollte die Ermittlung des Masseschwerpunkts allein durch Messen von Belastungen zwischen dem Schienenfahrzeug und dem Gleiskörper erfolgen können, insbesondere Radaufstands- und Radführungskräften (Q- und Y-Kräfte), um eine möglichst zuverlässige Lokalisierung des Masseschwerpunkts des Schienenfahrzeugs zu erzielen. Ferner besteht die Forderung nach einer zeitsparenden Ermittlung des Masseschwerpunkts eines Schienenfahrzeugs, beispielsweise während der Fahrt vor oder nach der Beladung des Schienenfahrzeugs.

Der Erfindung liegt daher die Aufgabe zugrunde, ein System sowie ein Verfahren zu schaffen, das eine Lokalisierung des Masseschwerpunkts von Schienenfahrzeugen zulässt.

Die vorliegende Erfindung löst diese Aufgabe durch ein System zur Ermittlung des Masseschwerpunkts von Schienenfahrzeugen mit den Merkmalen des Patentanspruchs 1 und durch ein Verfahren mit den Merkmalen des Patentanspruchs 8. Bei dem erfindungsgemäßen System ist an einer Schienenmessstrecke mit zwei Schienen eine Anzahl von Messvorrichtungen zur Erfassung der an den Schienen der Schienenmessstrecke wirkenden Kräfte und/oder Momente vorgesehen wobei das Höhenniveau der einen Schiene gegenüber dem Höhenniveau der anderen Schiene der Schienenmessstrecke variiert. Aufgrund der variierenden Höhenniveaus der Schienen innerhalb der Schienenmessstrecke ergeben sich unterschiedliche Gewichtsbelastung der Schienen, was auf die räumliche Lage des Masseschwerpunkts des Schienenfahrzeugs schließen lässt.

Besonders vorteilhaft löst die vorliegende Erfindung die oben genannte Aufgabe, wenn das System zur Ermittlung des Masseschwerpunkts von Schienenfahrzeugen derart ausgebildet ist, dass

- in einem ersten Abschnitt der Schienenmessstrecke das Höhenniveau der einen Schiene auf einem ersten Höhenniveau gegenüber der anderen Schiene angeordnet und/oder einstellbar ist und
- in einem zweiten Abschnitt der Schienenmessstrecke das Höhenniveau der einen Schiene auf einem zweiten Höhenniveau gegenüber der anderen Schiene angeordnet und/oder einstellbar ist, wobei sich das erste Höhenniveau vom zweiten Höhenniveau unterscheidet.

Dadurch kann die Ermittlung des Masseschwerpunkts von Schienenfahrzeugen auch in einer einzigen Überfahrt der Schienenmessstrecke erfolgen, weil dabei zwei Messungen bei unterschiedlichem Neigungswinkel der Schienen innerhalb der Schienenmessstrecke vorgenommen werden können.

So kann beispielsweise durch Stopfen des Gleisuntergrunds bzw. Unterlegen von Blechen unter die Schienen der Schienenmessstrecke eine entsprechende Differenz in den Höhenlagen der Schienen in beiden Messabschnitten der Schienenmessstrecke eingerichtet werden. Dabei ist es nicht zwingend erforderlich, dass die Schienen im ersten Abschnitt der Schienenmessstrecke in einer horizontalen Ebene liegen. Zur Durchführung der erfindungsgemäßen Ermittlung des Masseschwerpunkts des Schienenfahrzeugs ist es lediglich erforderlich, dass in einem ersten Abschnitt der Schienenmessstrecke eine andere Höhenlagedifferenz zwischen den Schienen gegenüber einem zweiten Abschnitt der Schienenmessstrecke vorhanden sein muss.

Bei einer weiteren bevorzugten Ausführungsform ist das erfindungsgemäße System derart ausgebildet ist, dass

- sowohl das Höhenniveau der einen Schiene der Schienenmessstrecke im Wesentlichen auf dasselbe Höhenniveau der anderen Schiene der Schienenmessstrecke einstellbar ist, so dass beide Schienen der Schienenmessstrecke in einer horizontalen Ebene liegen,
- als auch das Höhenniveau der einen Schiene der Schienenmessstrecke auf ein gegenüber der anderen Schiene der Schienenmessstrecke abweichendes Höhenniveau einstellbar ist, so dass die beiden Schienen der Schienenmessstrecke nicht in einer horizontalen Ebene, sondern auf unterschiedlichem Höhenniveau liegen.

Es ist auch möglich, die vorliegende Erfindung unter Nutzung des Höhenprofils einer normalen Schienenstrecke anzuwenden, wenn das Höhenprofil in unterschiedlichen Abschnitten der Schienenstrecke verschiedene Neigungen der Schienen in Querrichtung der Schienenstrecke aufweisen. Dieses Höhenprofil der könnte vorab mittels eines Messfahrzeuges gemessen werden und basierend auf diesen Messergebnissen und den gewonnenen Messdaten von Messvorrichtungen, die an der normalen Schienenstrecke angeordnet sind, kann dann nach der vorliegenden Erfindung die Lage des Masseschwerpunkts von Schienenfahrzeugen bestimmt werden.

Die vorliegende Erfindung kann auch in einer dynamischen Schienenmessstrecke implementiert sein, bei der das Höhenniveau der einen Schiene gegenüber dem Höhenniveau der anderen Schiene der Schienenmessstrecke nicht durch entsprechende Schienenführung innerhalb der Schienenmessstrecke, sondern mechanisch einstellbar oder beispielsweise durch motorischen Antrieb veränderbar ist. Auf diese Weise können mit dem erfindungsgemäßen System zur Ermittlung des Masseschwerpunkts von Schienenfahrzeugen die Schienenfahrzeuge auf der Schienenmessstrecke kontrolliert und gezielt in eine Schräglage mit einer bestimmten Neigung versetzt werden.

Ferner können mit dem erfindungsgemäßen System sowohl Messungen bei Überfahrt der Schienenmessstrecke mit einem Schienenfahrzeug durchgeführt werden, während die beiden Schienen der Schienenmessstrecke im Wesentlichen in einer horizontalen Ebene liegen, als auch Messungen durchgeführt werden, während die beiden Schienen der Schienenmessstrecke nicht in einer horizontalen Ebene, sondern auf unterschiedlichem Höhenniveau liegen.

Die vorliegende Erfindung kann auch in einer statischen Schienenmessstrecke angewendet werden, bei der durch entsprechende Schienenführung die eine Schiene gegenüber der anderen Schiene innerhalb der Schienenmessstrecke ein unterschiedliches Höhenniveau aufweist. Dann können zwei Messungen durchgeführt werden, wobei bei der einen Messung das zu messende Schienenfahrzeug die Schienenmessstrecke in einer ersten Ausrichtung belastet und/oder Fahrtrichtung passiert und bei der anderen Messung das zu messende Schienenfahrzeug die Schienenmessstrecke in einer ersten Ausrichtung entgegen gesetzten Ausrichtung belastet und/oder in der entgegen gesetzten Fahrtrichtung passiert. Dazu muss das Schienenfahrzeug beispielsweise lediglich gedreht werden, beispielsweise mittels Dreiecksfahrt oder durch eine Gleisschleife.

Dadurch hat das zu messende Schienenfahrzeug bei der ersten Messung bzw. Überfahrt auf der Schienenmessstrecke eine Neigung zu einer Seite und bei der zweiten Messung bzw. Überfahrt auf der Schienenmessstrecke eine Neigung zu der anderen Seite. Aufgrund dieses Neigungsunterschieds kann dann nach der vorliegenden Erfindung die räumliche Lage des Masseschwerpunkts des Schienenfahrzeugs bestimmt werden.

Gemäß einem weiteren Aspekt der vorliegenden Erfindung wird ein Verfahren bereitgestellt zur Ermittlung des Masseschwerpunkts von Schienenfahrzeugen mittels einer Schienenmessstrecke mit zwei Schienen, umfassend die folgenden Schritte:

- Einstellen der einen Schiene auf ein gegenüber der anderen Schiene unterschiedliches Höhenniveau durch entsprechende Schienenführung innerhalb der Schienenmessstrecke und/oder durch motorischen Antrieb;
- Belasten der Schienenmessstrecke mit dem Gewicht des Schienenfahrzeugs;
- Erfassen der an der Schienenmessstrecke wirkenden Kräfte und/oder Momente, die beim Belasten der Schienenmessstrecke durch das Schienenfahrzeug entstehen, mittels einer Anzahl von Messvorrichtungen; und
- Auswerten der von den Messvorrichtungen gelieferten elektrischen Messsignale, um daraus die Lage des Masseschwerpunkts des Schienenfahrzeugs zu ermitteln.

Dabei ist es für die Zuverlässigkeit der Lokalisierung des Masseschwerpunkts von Vorteil, wenn mindestens zwei Messungen vorgenommen werden umfassend die folgenden Schritte:

- Einstellen der einen Schiene auf ein erstes Höhenniveau, das gegenüber der anderen Schiene unterschiedlich ist;
- Belasten der Schienenmessstrecke mit dem Gewicht des Schienenfahrzeugs;
- Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen;

- Einstellen der einen Schiene auf ein zweites Höhenniveau, das sich vom ersten Höhenniveau unterscheidet und gegenüber dem Höhenniveau der anderen Schiene unterschiedlich ist;
  - Belasten der Schienenmessstrecke mit dem Gewicht des Schienenfahrzeugs;
  - Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen; und
  - Auswerten der von den Messvorrichtungen gelieferten elektrischen Messsignale, um daraus die Lage des Masseschwerpunkts des Schienenfahrzeugs zu ermitteln.

Dadurch können die Messwerte der einen Messung mit einer ersten Neigung der Schienenmessstrecke mit den Messwerten der anderen Messung bei einer Schienenmessstrecke mit einer zweiten Neigung, die von der ersten Neigung unterschiedlich ist, miteinander verglichen bzw. mathematisch zueinander ins Verhältnis gesetzt werden. Aus der mathematischen Korrelation bzw. Auswertung der Messwerte kann die räumliche Lage des Masseschwerpunkts vom Schienenfahrzeug ermittelt werden.

Die beiden Messungen können auch an einer statischen Schienenmessstrecke vorgenommen werden, sofern diese einen ersten Abschnitt aufweist, in dem das Höhenniveau der einen Schiene gegenüber der anderen Schiene auf einem ersten Höhenniveau angeordnet ist, sowie einen zweiten Abschnitt, in dem das Höhenniveau der einen Schiene gegenüber der anderen Schiene auf einem zweiten Höhenniveau angeordnet ist, das sich vom ersten Höhenniveau unterscheidet. Das erfindungsgemäße Verfahren kann dann mit den folgenden Schritten ausgeführt werden:

- Belasten der Schienenmessstrecke durch das Schienenfahrzeug in einem ersten Abschnitt der Schienenmessstrecke, in dem sich die eine Schiene gegenüber der anderen Schiene der Schienenmessstrecke auf einem ersten Höhenniveau befindet;
  - Erfassen der an dem ersten Abschnitt der Schienenmessstrecke wirkenden Kräfte und/oder Momente, die beim Belasten durch das Schienenfahrzeug entstehen, mittels der Anzahl von Messvorrichtungen;
  - Belasten der Schienenmessstrecke durch das Schienenfahrzeug in einem zweiten Abschnitt der Schienenmessstrecke, in dem sich die eine Schiene gegenüber der anderen Schiene der Schienenmessstrecke auf einem zweiten Höhenniveau befindet, das sich von dem ersten Höhenniveau unterscheidet;
  - Erfassen der an dem zweiten Abschnitt der Schienenmessstrecke wirkenden Kräfte und/oder Momente, die beim Belasten durch das Schienenfahrzeug entstehen, mittels der Anzahl von Messvorrichtungen; und
  - Auswerten der von den Messvorrichtungen gelieferten elektrischen Messsignale, um daraus die Lage des Masseschwerpunkts des Schienenfahrzeugs zu ermitteln.

Darüber hinaus kann das erfindungsgemäße Verfahren auch an einer Schienenmessstrecke durchgeführt werden, die nur einen Abschnitt mit einer Querneigung bzw. einer unterschiedlichen Höhenlage der Schienen aufweist. Dazu wird dieselbe Schienenmessstrecke vom zu messenden Schienenfahrzeug zweimal belastet bzw. überfahren, nämlich einmal in einer ersten Ausrichtung und/oder Fahrtrichtung und das zweite Mal in der entgegen gesetzten Ausrichtung und/oder Fahrtrichtung.

Das erfindungsgemäße Verfahren umfasst dann vorzugsweise die folgenden Schritte:

- Anordnen der einen Schiene auf ein gegenüber der anderen Schiene unterschiedliches Höhenniveau;
  - Belasten der Schienenmessstrecke mit dem Gewicht des Schienenfahrzeugs in einer ersten Ausrichtung und/oder Fahrtrichtung;
  - Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen;
  - Belasten der Schienenmessstrecke mit dem Gewicht des Schienenfahrzeugs, wobei das Schienenfahrzeug die Schienenmessstrecke einer der ersten Ausrichtung und/oder Fahrtrichtung entgegen gesetzten Ausrichtung und/oder Fahrtrichtung belastet;
  - Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen; und
  - Auswerten der von den Messvorrichtungen gelieferten elektrischen Messsignale, um daraus die Lage des Masseschwerpunkts des Schienenfahrzeugs zu ermitteln.

Alternativ kann neben der Belastungsmessung der Schienenmessstrecke, bei der das Höhenniveau der einen Schiene auf ein gegenüber der anderen Schiene unterschiedliches Höhenniveau eingestellt ist, auch eine Belastungsmessung der Schienenmessstrecke mit demselben Schienenfahrzeug durchgeführt werden, bei der beide Schienen im Wesentlichen auf dasselbe Höhenniveau eingestellt sind und damit in derselben horizontalen Ebene liegen. Dadurch können die Messwerte der einen Messung mit horizontaler Ausrichtung mit den Messwerten der anderen Messung mit einer von der Horizontalen abweichenden Ausrichtung miteinander verglichen bzw. mathematisch zueinander ins Verhältnis gesetzt werden. Aus der mathematischen Korrelation bzw. Auswertung der Messwerte kann die Lage des Masseschwerpunkts vom Schienenfahrzeug ermittelt werden.

Die Belastung der Schienenmessstrecke mit dem Gewicht des Schienenfahrzeugs kann beispielsweise entweder durch Überfahren der Schienenmessstrecke mit dem Schienenfahrzeug erfolgen und/oder durch die Gewichtsbelastung des ruhenden Schienenfahrzeugs, das zur Durchführung der Messung auf der Schienenmessstrecke abgestellt ist.

Abhängig von der Gewichtsverteilung des Schienenfahrzeugs und der Lastverteilung von dessen Beladung befindet sich der Masseschwerpunkt des Schienenfahrzeugs in einer bestimmten räumlichen Lage. Die Gewichtsverteilung bzw. die Lage des Masseschwerpunkts vom Schienenfahrzeug verursacht eine entsprechende Verteilung der Gewichtsbelastung auf die beiden Schienen der Schienenmessstrecke. Die Verteilung der Gewichtsbelastung auf die beiden Schienen der Schienenmessstrecke ist ferner von der seitlichen Neigung des Schienenfahrzeugs abhängig.

Diese unterschiedliche Gewichtsverteilung aufgrund der seitlichen Neigung des Schienenfahrzeugs auf die beiden Schienen der Schienenmessstrecke macht sich die vorliegende Erfindung zu Nutze, indem die Gewichtsbelastungen der beiden Schienen der Schienenmessstrecke durch das Schienenfahrzeug gemessen werden, wenn die beiden Schienen der Schienenmessstrecke in einer horizontalen Ebene liegen und jeweils auf einem unterschiedlichen Höhenniveau liegen, um die räumliche Lage des Masseschwerpunkts vom Schienenfahrzeug zu ermitteln.

In vorliegenden Zusammenhang bedeutet die Einstellung der beiden Schienen der Schienenmessstrecke auf dasselbe Höhenniveau, dass sich die Laufflächen der beiden Schienen der Schienenmessstrecke, auf denen die Räder des Schienenfahrzeugs abrollen, auf demselben Höhenniveau befinden und damit in einer horizontalen Ebene liegen. Wenn die Schienen der Schienenmessstrecke in einer horizontalen Ebene liegen, überfährt das Schienenfahrzeug die Schienenmessstrecke folglich ebenfalls mit horizontaler Ausrichtung, so dass das Lot des Schienenfahrzeugs in der Senkrechten liegt.

Dementsprechend bedeutet die Einstellung der einen Schiene der Schienenmessstrecke auf ein gegenüber der anderen Schiene unterschiedliches Höhenniveau, dass sich die Laufflächen der Schienen der Schienenmessstrecke auf einem unterschiedlichen Höhenniveau befinden und sich demzufolge nicht in einer horizontalen Ebene befinden. Bei derart eingestellten Schienen der Schienenmessstrecke überfährt das Schienenfahrzeug die Schienenmessstrecke folglich mit einer seitlichen Neigung, so dass das Lot des Schienenfahrzeugs von der Senkrechten abweicht. Diese Fahrsituation entspricht auch einer Kurvenfahrt des Schienenfahrzeugs auf einem gebogenen Gleiskörper, bei der die Gewichtsbelastung des Schienenfahrzeugs auf den Gleiskörper durch die Fliehkraft beeinflusst wird.

Eine zuverlässige Ermittlung der Lage des Schwerpunkts vom Schienenfahrzeug wird ferner begünstigt, wenn das Erfassen der Kräfte und/oder Momente an beiden Schienen der Schienenmessstrecke gleichzeitig vorgenommen wird. Solche gleichzeitig ermittelten Messsignale können dann miteinander korreliert oder überlagert werden, so dass von derselben Überfahrung der Schienenmessstrecke durch ein Schienenfahrzeug gleichzeitig erfasste Messsignale an beiden Schienen der Schienenmessstrecke mit unmittelbarer zeitlicher Korrelation miteinander in Bezug gesetzt und parallel ausgewertet werden können. Durch mathematische Auswertung der zueinander korrelierten Messsignale kann dann die räumliche Lage des Masseschwerpunkts des Schienenfahrzeugs ermittelt werden. Weitere besondere Ausgestaltungen und Ausführungsformen der Erfindung sind in den Unteransprüchen angegeben.

Mit Hilfe des Systems und Verfahrens der vorliegenden Erfindung zur Lokalisierung des Masseschwerpunkts von Schienenfahrzeugen kann beispielsweise eine gleichmäßige Beladung des Schienenfahrzeugs überprüft und ggf. eine Umverteilung der Last veranlasst werden. Mit der vorliegenden Erfindung können die Betriebssicherheit gefährdende Situationen in Bezug auf die Lage des Masseschwerpunkts von Schienenfahrzeugen gemacht werden. Die vorliegende Erfindung stellt damit eine Optimierung zur Überwachung der Betriebssicherheit von Schienenfahrzeugen dar.

Die vorliegende Erfindung stellt damit ein System sowie ein Verfahren zur Ermittlung der räumlichen Lage des Masseschwerpunkts von Schienenfahrzeugen bereit, die allein durch Messen von Belastungen zwischen dem Schienenfahrzeug und dem Gleiskörper erfolgt. Dazu können beispielsweise die Radaufstands- und/oder Radführungskräfte (Q- und Y-Kräfte) erfasst und verwendet werden, die bei Belastung der Schienenmessstrecke durch das Schienenfahrzeug entstehen, um eine möglichst zuverlässige Lokalisierung des Masseschwerpunkts des Schienenfahrzeugs zu erhalten. Zusätzlich können Messgeräte zum Erfassen nur der in horizontaler Richtung auf die Schiene einwirkenden Kräfte (x/y-Kräfte) oder Momente vorgesehen sein.

Durch die vorliegende Erfindung werden die beim Abstellen eines Schienenfahrzeugs auf der Schienenmessstrecke oder beim Überfahren der Schienenmessstrecke durch ein Schienenfahrzeug in die Schienen eingeleiteten Kräfte und/oder Momente berücksichtigt, indem diese durch Messvorrichtungen oder Sensoren erfasst werden und in einer entsprechenden elektronischen Auswerteeinheit verarbeitet werden.

Geeignete Messvorrichtungen oder Sensoren für das erfindungsgemäße System können Beschleunigungsaufnehmer sein, welche die beim Überfahren der Schienenmessstrecke durch das Schienenfahrzeug entstehenden Beschleunigungen in den Schienen erfassen. Ferner können Messvorrichtungen vorgesehen sein, die der Erfassung der Kräfte und/oder Momente dienen, die bei Belastung der Schienenmessstrecke durch das Schienenfahrzeug in den Gleiskörper eingeleitet werden. Besonders vorteilhaft ist es, wenn eine Anzahl von Messvorrichtungen unter einem Schienenfuß, zwischen dem Schienenfuß und dem Schienenbett und/oder in der Schiene integriert angeordnet sind, da an diesen Stellen die in der Schiene wirkenden Kräfte und Momente auf zuverlässige Weise erfasst werden können.

Dabei können Kraftmessgeräte zum Erfassen der in senkrechter Richtung auf die Schiene einwirkenden Kräfte oder Momente vorgesehen sein und/oder Kraftmessgeräte zum Erfassen der in horizontaler Richtung auf die Schiene einwirkenden Kräfte oder Momente vorgesehen sein. Die Genauigkeit der Messung kann unterstützt werden, wenn an einer Anzahl von benachbarten Schwellen der Messstrecke jeweils mindestens eine Messvorrichtung zum Erfassen der auf die Schiene einwirkenden Kräfte und/oder Momente angeordnet sind.

Die Kraftmessvorrichtungen und Beschleunigungsaufnehmer wandeln die erfassten Kräfte und/oder Momente in elektrische Signale um, die über entsprechende Leitungen an eine Auswerteeinheit weitergeleitet werden. Die Auswerteeinheit umfasst elektronische Mittel, die vorzugsweise so ausgebildet sind, dass sie die von den Kraftmessvorrichtungen und den Beschleunigungsaufnehmern gelieferten elektrischen Messsignale in mathematische Beziehungen setzen, mathematische Funktionen damit ausführen, miteinander korrelieren und auswerten können, um daraus Rückschlüsse auf die räumliche Lage des Masseschwerpunkts des Schienenfahrzeug zu ziehen und diesen zu lokalisieren.

Das erfindungsgemäße System und Verfahren kann zur Bestimmung der räumlichen Lage des Masseschwerpunkts eines Schienenfahrzeugs verwendet werden, wobei lediglich die Kräfte und Momente zur Berechnung herangezogen werden, die durch das auf der Schienenmessstrecke stehende oder fahrende Schienenfahrzeug auf den Gleiskörper ausgeübt werden. Das erfindungsgemäße Messsystem kann insbesondere zur Bestimmung des Fahrverhaltens von Schienenfahrzeugen in Kurven verwendet werden, da bei Kurvenfahrt die Gefahr des Entgleisens durch ausgelagerte Masseschwerpunkte und Fliehkräfte erhöht ist.

Die erfindungsgemäße Schienenmessstrecke kann vorteilhaft in einem normalen Gleiskörper integriert werden, so dass die Ermittlung des Schwerpunkts eines Schienenfahrzeugs während der Fahrt beispielsweise vor oder nach einem Beladungsvorgang des Schienenfahrzeugs erfolgen kann, was eine zeitsparende Ermittlung des Masseschwerpunkts ermöglicht.

Nachfolgend wird die Erfindung anhand eines Ausführungsbeispiels und der beigefügten Zeichnung näher erläutert. Zu den Zeichnungen:

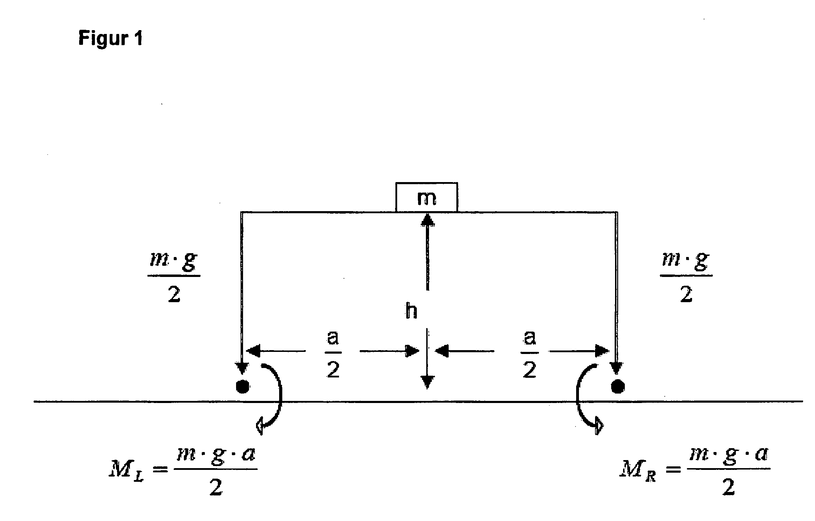

Figur 1    zeigt eine schematische Darstellung eines Systems gemäß einer Ausführungsform der vorliegenden Erfindung zur Ermittlung der räumlichen Lage des Masseschwerpunkts eines Schienenfahrzeugs durch Messung von Kräften, die durch die Gewichtsbelastung eines Schienenfahrzeugs in die Schienen einer Schienenmessstrecke eingeleitet werden, wobei die Schienen der Schienenmessstrecke auf demselben Höhenniveau eingestellt sind und sich damit in einer horizontalen Ebene befinden;

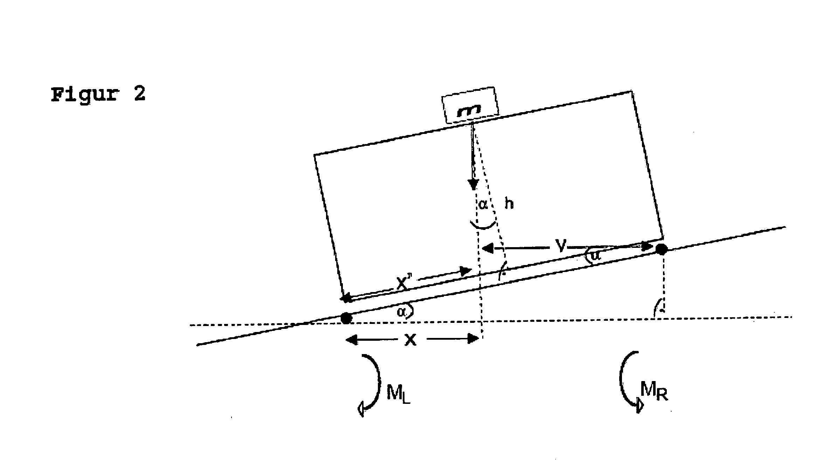

Figur 2    zeigt eine schematische Darstellung des Systems gemäß der in Figur 1 gezeigten Ausführungsform der vorliegenden Erfindung zur Ermittlung der räumlichen Lage des Masseschwerpunkts eines Schienenfahrzeugs durch Messung von Kräften und Momenten, wobei sich die Schienen der Schienenmessstrecke auf einem unterschiedlichen Höhenniveau befinden; und

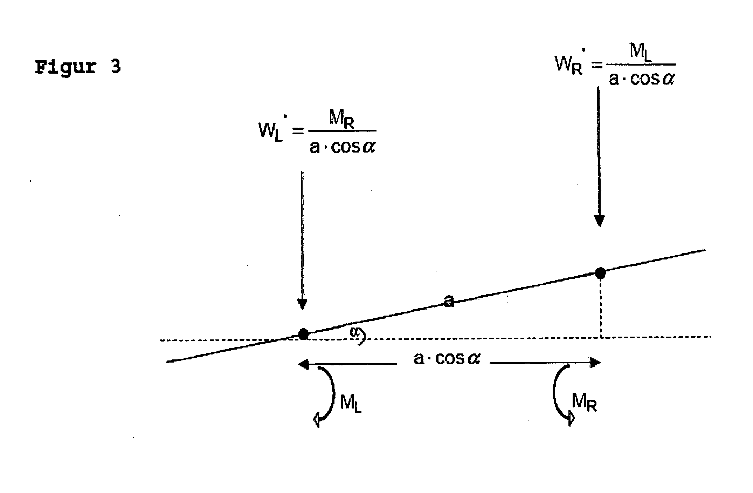

Figur 3    ist eine schematische Darstellung der Kräfte und Momente, die aufgrund der Gewichtsbelastung eines Schienenfahrzeugs auf die Schienen der Schienenmessstrecke des in Figur 2 gezeigten erfindungsgemäßen Systems einwirken, bei dem die Schienen der Schienenmessstrecke auf einem unterschiedlichen Höhenniveau eingestellt sind.

Figur 1 zeigt eine Schnittdarstellung durch einen schematischen Aufbau eines erfindungsgemäßen Systems zur Ermittlung der räumlichen Lage des Masseschwerpunkts eines Schienenfahrzeugs durch Messung von Kräften, die durch die Gewichtsbelastung eines Schienenfahrzeugs in die Schienen einer Schienenmessstrecke eingeleitet werden. Dabei ist die Masse m des Schienenfahrzeugs durch ein Rechteck in der Höhe h über der Ebene der Schienenmessstrecke schematisch dargestellt. Die Schienen der Schienenmessstrecke sind in den Figuren jeweils durch kreisrunde Punkte stilisiert dargestellt. Die Schienen der Schienenmessstrecke sind in Figur 1 auf demselben Höhenniveau eingestellt und befinden sich damit in einer horizontalen Ebene.

Bei der dargestellten Ausführungsform der vorliegenden Erfindung können die Schienen der Schienenmessstrecke auf beliebige Höhenniveaus oder in einem bestimmten Neigungswinkel zueinander quer zur Längsrichtung der Schienenmessstrecke eingestellt werden. Zusätzlich können die Schienen der Schienenmessstrecke gemeinsam oder separat jeweils in einem bestimmten Neigungswinkel in Längsrichtung der Schienenmessstrecke eingestellt werden, um beispielsweise eine selbständige Überfahrt von Schienenfahrzeugen ohne eigenen Antrieb unter Ausnutzung der Schwerkraft zu gewährleisten.

Die linke und rechte Schiene der Schienenmessstrecke ist jeweils mit einer Anzahl von Messvorrichtungen (nicht gezeigt) versehen, um die Kräfte und/oder Momente zu erfassen, die bei Belastung der Schienenmessstrecke durch das Schienenfahrzeug auf die Schienen ausgeübt werden. An der Schienenmessstrecke können auch Kraftmessgeräte oder Beschleunigungsaufnehmer zum Erfassen der in senkrechter Richtung und/oder in horizontaler Richtung auf die Schiene einwirkenden Kräfte oder Beschleunigungen vorgesehen sein.

Bei den Messvorrichtungen kann es sich beispielsweise um eine Kraftmesszelle handeln, wie sie grundsätzlich aus dem Dokument DE 39 37 318 A1 bekannt sind. In einer solchen Kraftmesszelle werden unter der Einwirkung der zu messenden Kraft Verformungsteile reversibel verformt, wodurch sich der elektrische Widerstand von an den Verformungsteilen angebrachten Dehnungsmessstreifen verändert, was als Messwert erfasst werden kann. Dieser Messwert kann dann als elektrisches Signal an eine entsprechende Auswerteeinheit weitergeleitet werden.

Auf diese Weise werden die auf die Schienen der Schienenmessstrecke einwirkenden Kräfte und Momente beispielsweise von einer Kraftmesszelle gemessen und in elektrische Signale umgewandelt, die über eine Signalleitung an eine Auswerteeinheit (nicht gezeigt) weitergeleitet werden. Die Auswerteeinheit umfasst elektronische Mittel, die vorzugsweise so ausgebildet sind, dass sie die elektrischen Messsignale miteinander in mathematische Beziehungen setzen, mathematische Funktionen ausführen und auswerten können, um daraus Rückschlüsse auf die räumliche Lage des Masseschwerpunkts des Schienenfahrzeugs zu ziehen und diesen so zu lokalisieren.

Die Schienen der Schienenmessstrecke sind mit einen Abstand a parallel zueinander angeordnet. Da sich die mittig angeordnete Masse m des Schienenfahrzeugs über dessen Räder auf beide Schienen mit demselben Höhenniveau der ebenen Schienenmessstrecke gleichmäßig verteilt, wirkt auf jede Schiene jeweils eine Kraft F von

$$F = \frac{m \cdot g}{2}$$

wobei g die Erdbeschleunigung ist. Daraus ergibt sich jeweils ein Drehmoment $M_L$ für die linke Schiene von

$$M_L = \frac{m \cdot g \cdot a}{2}$$

und dasselbe Drehmoment $M_R$ für die rechte Schiene von

$$M_L = \frac{m \cdot g \cdot a}{2} \; .$$

Figur 2 zeigt eine schematische Darstellung vom Aufbau des Systems gemäß der in Figur 1 gezeigten Ausführungsform der vorliegenden Erfindung zur Ermittlung der räumlichen Lage des Masseschwerpunkts eines Schienenfahrzeugs, wobei sich die Schienen der Schienenmessstrecke auf einem unterschiedlichen Höhenniveau befinden. Dazu ist in dem dargestellten Ausführungsbeispiel die rechte Schiene der Schienenmessstrecke gegenüber der linken Schiene auf einem höheren Niveau eingestellt, so dass die Verbindung zwischen den Schienen der Schienenmessstrecke gegenüber der horizontalen um den Winkel $\alpha$ geneigt ist. Folglich ergibt sich die Distanz x zwischen der linken Schiene und dem Lot des Masseschwerpunkts m aus:

$$x' = \frac{a}{2} - h \cdot \tan\alpha \qquad = \qquad \frac{a}{2} - h \cdot \frac{\sin\alpha}{\cos\alpha} \qquad\qquad (1)$$

$$x = x' \cdot \cos\alpha \qquad = \qquad \frac{a}{2} \cdot \cos\alpha - h \cdot \sin\alpha \qquad\qquad (2)$$

Dementsprechend ergibt sich die Distanz y zwischen der rechten Schiene und dem Lot des Masseschwerpunkts m aus:

$$y = a \cdot \cos\alpha - x \qquad = \qquad \frac{a}{2} \cdot \cos\alpha + h \cdot \sin\alpha \qquad (3)$$

Die Distanzen x und y stellen die wirksamen Hebel dar, mit denen die Gewichtskraft des Schienenfahrzeugs m auf die linke und auf die rechte Schiene der Schienenmessstrecke wirken. Deshalb ergibt sich aus den Gleichungen (2) und (3) jeweils ein wirksames Drehmoment $M_L$ für die linke Schiene und $M_R$ für die rechte Schiene von:

$$M_L = m \cdot g \cdot x \qquad = \qquad m \cdot g \cdot \left(\frac{a}{2} \cdot \cos\alpha - h \cdot \sin\alpha\right) \qquad (4)$$

$$M_R = m \cdot g \cdot y \qquad = \qquad m \cdot g \cdot \left(\frac{a}{2} \cdot \cos\alpha + h \cdot \sin\alpha\right) \qquad (5)$$

Die Subtraktion der Gleichungen (4) und (5) führt zur Differenz zwischen den wirksamen Drehmomenten $M_L$ und $M_R$:

$$M_R - M_L \qquad = \qquad m \cdot g \cdot 2 \cdot h \cdot \sin\alpha \qquad (6)$$

In Figur 3 ist eine schematische Darstellung der Kräfte und Momente gezeigt, die durch die Gewichtsbelastung eines Schienenfahrzeugs in die Schienen der Schienenmessstrecke der in Figur 2 dargestellten Ausführungsform des erfindungsgemäßen Systems eingeleitet werden, bei dem die Schienen der Schienenmessstrecke jeweils auf einem unterschiedlichen Höhenniveau eingestellt sind.

Nach der vorliegenden Erfindung kann die Ermittlung der Lage des Masseschwerpunkts des Schienenfahrzeugs allein durch Messung von Kräften erfolgen, die durch die Gewichtsbelastung eines Schienenfahrzeugs in die Schienen der Schienenmessstrecke eingeleitet werden. Dazu werden die von den Messvorrichtungen gelieferten Messsignale miteinander in mathematische Beziehungen gesetzt und ausgewertet, wie nachfolgend näher beschrieben.

Durch die vorliegende Erfindung kann mittels einer Schienenmessstrecke aus den Lastverteilungen auf den Schienen des Schienenfahrzeugs auf die x- und y-Koordinaten des Ladungsschwerpunktes geschlossen werden, wobei die x- und y-Koordinaten in einer horizontalen Ebene liegen. Zur Ermittlung der z-Koordinate, die sich senkrecht zu der horizontalen Ebene erstreckt, sind mindestens zwei Wägungen erforderlich, sofern die Ladungsverteilung des Schienenfahrzeugs bezüglich der Y-Koordinate nicht bekannt ist.

Eine einzige Wägung wäre nur in dem Spezialfall ausreichend, wenn bereits bekannt wäre, dass das Schienenfahrzeug bzgl. seiner seitlichen Belastungen ausgeglichen wäre, also rechts/links (y-Koordinate) gleich beladen ist und somit die Differenz zwischen jeweils rechten und linken Radlasten Null wäre. Dann könnte mit Hilfe der vorliegenden Erfindung aufgrund einer einzigen Messung über eine geneigte Schienenmessstrecke mit Schräglage der Masseschwerpunkt des Schienenfahrzeugs bestimmt werden. Im Allgemeinen ist ein Waggon jedoch ungleichmäßig beladen, so dass zwei Wägungen mit unterschiedlicher Neigung erforderlich sind.

Zur Durchführung des erfindungsgemäßen Verfahrens mit zwei Wägungen kann eine erste Wägung auf der Schienenmessstrecke bei ebenem Gleis durchgeführt werden, wobei die Schienen der Schienenmessstrecke auf demselben Höhenniveau liegen. Eine zweite Wägung kann auf der Schienenmessstrecke bei einem Gleis mit definierter einseitiger Überhöhung durchgeführt werden, wobei z.B. die rechte Schiene gegenüber der linken Schiene der Schienenmessstrecke auf einem ca. 10 mm höheren Niveau eingestellt wird. Aus der

Differenz zwischen der Gewichtslast der linken Schiene gegenüber der Gewichtslast der rechten Schiene und dem Vergleich zwischen der ersten Wägung mit ebenem Gleis und der zweiten Wägung mit geneigtem Gleis kann auch die z-Koordinate zur Lage des Masseschwerpunkts des Schienenfahrzeugs gemäß nachfolgender Formeln ermittelt werden. Bezug nehmend auf Figur 3 berechnen sich die Kräfte W'$_L$ und W'$_R$ wie folgt:

$$W_L' = \frac{M_R}{a \cdot \cos\alpha} = \frac{m \cdot g \cdot \left(\frac{a}{2} \cdot \cos\alpha + h \cdot \sin\alpha\right)}{a \cdot \cos\alpha} = \frac{m \cdot g}{2} \cdot \left(1 + 2 \cdot \frac{h}{a} \cdot \tan\alpha\right)$$

$$= \frac{m \cdot g}{2} + m \cdot g \cdot \frac{h}{a} \cdot \tan\alpha \qquad\qquad (7)$$

$$W_R' = \frac{M_L}{a \cdot \cos\alpha} \qquad\qquad (8)$$

Einsetzen von Gleichung (4) führt zu:

$$W_R' = \frac{m \cdot g}{2} - m \cdot g \cdot \frac{h}{a} \cdot \tan\alpha \qquad\qquad (9)$$

Folglich ergibt sich die Berechung der Höhe h und damit der z-Koordinate des Masseschwerpunkts des Schienenfahrzeugs aus:

$$\Rightarrow \quad h = \frac{\Delta W \cdot a}{m \cdot g \cdot \tan\alpha} \qquad\qquad (10)$$

wobei

$$\Delta W = m \cdot g \cdot \frac{h}{a} \cdot \tan\alpha \qquad\qquad (11)$$

Die Auswerteeinheit des erfindungsgemäßen Systems umfasst geeignete elektronische Elemente, die dazu ausgebildet sind, die oben beschriebenen mathematischen Funktionen mit den von den Messvorrichtungen gelieferten elektrischen Signalen auszuführen und so die räumliche Lage des Masseschwerpunkts des Schienenfahrzeugs festzustellen.

Nach der vorliegenden Erfindung lässt sich der Masseschwerpunkts eines Schienenfahrzeugs sich mit zwei Messungen bzw. Wägungen des Schienenfahrzeugs auf der Schienenmessstrecke lokalisieren, wobei die eine Messung bzw. Wägung an der Schienenmessstrecke mit ebenem Gleis durchgeführt werden kann, bei der die Schienen der Schienenmessstrecke auf demselben Höhenniveau eingestellt sind, und die zweite Messung an der Schienenmessstrecke mit geneigtem Gleis durchgeführt werden kann, bei der die eine Schiene der Schienenmessstrecke auf ein unterschiedliches Höhenniveau gegenüber der anderen Schiene der Schienenmessstrecke eingestellt ist.

Folglich werden bei dieser Ausführungsform des erfindungsgemäßen Verfahrens mindestens zwei Messungen vorgenommen umfassend die folgenden Schritte:

- Einstellen des Höhenniveaus der einen Schiene im Wesentlichen auf dasselbe Höhenniveau der anderen Schiene der Schienenmessstrecke, so dass beide Schienen der Schienenmessstrecke im Wesentlichen in einer horizontalen Ebene liegen;
- Belasten der Schienenmessstrecke mit dem Gewicht des Schienenfahrzeugs;
- Erfassen der an der Schienenmessstrecke wirkenden Kräfte und/oder Momente, die beim Belasten der Schienenmessstrecke durch das Schienenfahrzeug entstehen, mittels einer Anzahl von Messvorrichtungen;
- Einstellen der einen Schiene auf ein Höhenniveau, das gegenüber der anderen Schiene unterschiedlich ist;
- Belasten der Schienenmessstrecke mit dem Gewicht des Schienenfahrzeugs;
- Erfassen der an der Schienenmessstrecke wirkenden Kräfte und/oder Momente, die beim Belasten der Schienenmessstrecke durch das Schienenfahrzeug entstehen, mittels einer Anzahl von Messvorrichtungen; und
- Auswerten der von den Messvorrichtungen gelieferten elektrischen Messsignale, um daraus die Lage des Masseschwerpunkts des Schienenfahrzeugs zu ermitteln.

Die oben beschriebene Ermittlung des Masseschwerpunkts eines Schienenfahrzeugs lässt sich auch durchführen, indem die erste Messung so wie auch die zweite Messung durch eine Messung an einer Schienenmessstrecke mit geneigtem Gleis ersetzt wird, so dass beide Messungen bei geneigtem Gleis mit unterschiedlichem Neigungswinkel durchgeführt werden, bei der eine Schiene der Schienenmessstrecke jeweils auf ein unterschiedliches Höhenniveau gegenüber der anderen Schiene der Schienenmessstrecke eingestellt ist.

Nach einer weiteren Ausführungsform des erfindungsgemäßen Verfahrens können folglich mindestens zwei Messungen mit geneigtem Gleis vorgenommen werden umfassend die folgenden Schritte:

- Einstellen der einen Schiene auf ein erstes Höhenniveau, das gegenüber der anderen Schiene unterschiedlich ist;
- Belasten der Schienenmessstrecke mit dem Gewicht des Schienenfahrzeugs;
- Erfassen der an der Schienenmessstrecke wirkenden Kräfte und/oder Momente, die beim Belasten der Schienenmessstrecke durch das Schienenfahrzeug entstehen, mittels einer Anzahl von Messvorrichtungen;
- Einstellen der einen Schiene auf ein zweites Höhenniveau, das sich vom ersten Höhenniveau unterscheidet und gegenüber dem Höhenniveau der anderen Schiene unterschiedlich ist;
- Belasten der Schienenmessstrecke mit dem Gewicht des Schienenfahrzeugs;
- Erfassen der an der Schienenmessstrecke wirkenden Kräfte und/oder Momente, die beim Belasten der Schienenmessstrecke durch das Schienenfahrzeug entstehen, mittels einer Anzahl von Messvorrichtungen; und
- Auswerten der von den Messvorrichtungen gelieferten elektrischen Messsignale, um daraus die Lage des Masseschwerpunkts des Schienenfahrzeugs zu ermitteln.

Das beschriebene Messprinzip nach der vorliegenden Erfindung funktioniert auch dann, wenn der Masseschwerpunkt des Schienenfahrzeugs nicht im geometrischen Mittelpunkt des Schienenfahrzeugs liegt, sondern davon abweichend nach vorne/hinten oder links/rechts verschoben ist. In den beigefügten Figuren wurde lediglich zur Veranschaulichung von einer gleich verteilten Ladung ausgegangen, so dass der Masseschwerpunkt des Schienenfahrzeugs im geometrischen Mittelpunkt des Schienenfahrzeugs liegt.

Besonders praktisch kann das erfindungsgemäße System mit der Schienenmessstrecke in einem realen Gleiskörper für Schienenfahrzeuge integriert werden. Auf diese Weise könnten verkehrende Schienenfahrzeuge während des Einsatzes, ohne Beeinträchtigungen oder Unterbrechungen des Fahrbetriebs im Verkehr auf die Lage ihrer Masseschwerpunkte überprüft werden. Bei Erfassung eines Masseschwerpunkts, der über eine bestimmte Grenze hinaus vom geometrischen Mittelpunkt des Schienenfahrzeugs entfernt liegt, kann das betreffende Schienenfahrzeug beispielsweise aus dem Verkehr gezogen oder eine entsprechende Umverteilung seiner Ladung veranlasst werden.

Während in der vorliegenden Beschreibung bestimmte exemplarische Ausführungsformen im Detail beschrieben und in den beigefügten Zeichnungen dargestellt wurden, sind solche Ausführungsformen lediglich illustrativ zu verstehen und nicht einschränkend für den Schutzbereich der Erfindung auszulegen. Es wird deshalb darauf hingewiesen, dass verschiedene Modifikationen an den beschriebenen oder dargestellten Ausführungsformen der Erfindung vorgenommen werden können, ohne von dem durch die beigefügten Ansprüche definierten Schutzumfang und dem Kern der Erfindung abzuweichen.

**Patentansprüche**

1.  System zur Ermittlung der Lage des Masseschwerpunkts von Schienenfahrzeugen, wobei an einer Schienenmessstrecke mit zwei Schienen eine Anzahl von Messvorrichtungen zur Erfassung der an den Schienen der Schienenmessstrecke wirkenden Kräfte und/oder Momente vorgesehen ist, **dadurch gekennzeichnet,** **dass** das Höhenniveau der einen Schiene gegenüber dem Höhenniveau der anderen Schiene der Schienenmessstrecke durch entsprechende Schienenführung innerhalb der Schienenmessstrecke unterschiedlich ist und/oder durch motorischen Antrieb veränderbar ist.

2. System nach einem der vorangehenden Ansprüche, wobei

   • in einem ersten Abschnitt der Schienenmessstrecke das Höhenniveau der einen Schiene auf einem ersten Höhenniveau gegenüber der anderen Schiene angeordnet und/oder einstellbar ist und
   • in einem zweiten Abschnitt der Schienenmessstrecke das Höhenniveau der einen Schiene auf einem zweiten Höhenniveau gegenüber der anderen Schiene angeordnet und/oder einstellbar ist, wobei sich das erste Höhenniveau vom zweiten Höhenniveau unterscheidet.

3. System nach einem der vorangehenden Ansprüche, wobei

   • sowohl das Höhenniveau der einen Schiene der Schienenmessstrecke auf dasselbe Höhenniveau der anderen Schiene der Schienenmessstrecke einstellbar ist, so dass beide Schienen der Schienenmessstrecke im Wesentlichen in einer horizontalen Ebene liegen,
   • als auch das Höhenniveau der einen Schiene der Schienenmessstrecke auf ein gegenüber der anderen Schiene der Schienenmessstrecke abweichendes Höhenniveau einstellbar ist, so dass die beiden Schienen der Schienenmessstrecke nicht in einer horizontalen Ebene, sondern auf unterschiedlichem Höhenniveau liegen.

4. System nach einem der vorangehenden Ansprüche, wobei die Höhenniveaus der Schienen in einem bestimmten Neigungswinkel zueinander quer zur Längsrichtung der Schienenmessstrecke angeordnet und/oder einstellbar sind, und/oder
   wobei die Schienen der Schienenmessstrecke gemeinsam oder separat jeweils in einem bestimmten Neigungswinkel in Längsrichtung der Schienenmessstrecke angeordnet und/oder einstellbar sind
   und/oder
   wobei die Messvorrichtungen zur Erfassung der auf die Schienen der Schienenmessstrecke einwirkenden Kräfte oder Momente unter einem Schienenfuß, zwischen dem Schienenfuß und dem Schienenbett und/oder in der Schiene integriert angeordnet sind
   und/oder
   wobei Messgeräte zum Erfassen der auf die Schienen in senkrechter Richtung und/oder in horizontaler Richtung einwirkenden Kräfte und/oder Momente vorgesehen sind.

5. System nach einem der vorangehenden Ansprüche, wobei ferner elektronische Mittel vorgesehen sind, welche die elektrischen Messsignale von den Messvorrichtungen auswerten, um daraus die Lage des Masseschwerpunkts des Schienenfahrzeugs zu ermitteln.

6. System nach dem vorangehenden Anspruch, wobei die elektronische Mittel ausgebildet sind, die von den Messvorrichtungen gelieferten Messsignale miteinander zu korrelieren und/oder mathematisch zu verarbeiten, um daraus die Lage des Masseschwerpunkts des Schienenfahrzeugs zu ermitteln.

7. System nach einem der vorangehenden Ansprüche, wobei das System mit der Schienenmessstrecke in einem realen Gleiskörper für Schienenfahrzeuge integrierbar ist.

8. Verfahren zur Ermittlung der Lage des Schwerpunkts von Schienenfahrzeugen mittels einer Schienenmessstrecke mit zwei Schienen, umfassend die folgenden Schritte:

   ▪ Einstellen der einen Schiene auf ein gegenüber der anderen Schiene unterschiedliches Höhenniveau durch entsprechende Schienenführung innerhalb der Schienenmessstrecke und/oder durch motorischen Antrieb;
   ▪ Belasten der Schienenmessstrecke mit dem Gewicht des Schienenfahrzeugs;
   ▪ Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen; und
   ▪ Auswerten der von den Messvorrichtungen gelieferten elektrischen Messsignale, um daraus die Lage des Masseschwerpunkts des Schienenfahrzeugs zu ermitteln.

9. Verfahren nach Anspruch 8, wobei mindestens zwei Messungen vorgenommen werden umfassend die folgenden Schritte:

- Anordnen der einen Schiene auf ein gegenüber der anderen Schiene unterschiedliches Höhenniveau;
- Belasten der Schienenmessstrecke mit dem Gewicht des Schienenfahrzeugs in einer ersten Ausrichtung und/oder Fahrtrichtung;
- Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen;
- Belasten der Schienenmessstrecke mit dem Gewicht des Schienenfahrzeugs, wobei das Schienenfahrzeug die Schienenmessstrecke einer der ersten Ausrichtung und/oder Fahrtrichtung entgegen gesetzten Ausrichtung und/oder Fahrtrichtung belastet;
- Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen; und
- Auswerten der von den Messvorrichtungen gelieferten elektrischen Messsignale, um daraus die Lage des Masseschwerpunkts des Schienenfahrzeugs zu ermitteln.

10. Verfahren nach Anspruch 8, wobei mindestens zwei Messungen vorgenommen werden umfassend die folgenden Schritte:

- Einstellen der einen Schiene auf ein erstes Höhenniveau, das gegenüber der anderen Schiene unterschiedlich ist;
- Belasten der Schienenmessstrecke mit dem Gewicht des Schienenfahrzeugs;
- Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen;
- Einstellen der einen Schiene auf ein zweites Höhenniveau, das sich vom ersten Höhenniveau unterscheidet und gegenüber dem Höhenniveau der anderen Schiene unterschiedlich ist;
- Belasten der Schienenmessstrecke mit dem Gewicht des Schienenfahrzeugs;
- Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen; und
- Auswerten der von den Messvorrichtungen gelieferten elektrischen Messsignale, um daraus die Lage des Masseschwerpunkts des Schienenfahrzeugs zu ermitteln.

11. Verfahren nach Anspruch 8, wobei mindestens zwei Messungen vorgenommen werden umfassend die folgenden Schritte:

- Belasten der Schienenmessstrecke durch das Schienenfahrzeug in einem ersten Abschnitt der Schienenmessstrecke, in dem sich die eine Schiene gegenüber der anderen Schiene der Schienenmessstrecke auf einem ersten Höhenniveau befindet;
- Erfassen der an dem ersten Abschnitt der Schienenmessstrecke wirkenden Kräfte und/oder Momente, die beim Belasten durch das Schienenfahrzeug entstehen, mittels der Anzahl von Messvorrichtungen;
- Belasten der Schienenmessstrecke durch das Schienenfahrzeug in einem zweiten Abschnitt der Schienenmessstrecke, in dem sich die eine Schiene gegenüber der anderen Schiene der Schienenmessstrecke auf einem zweiten Höhenniveau befindet, das sich von dem ersten Höhenniveau unterscheidet;
- Erfassen der an dem zweiten Abschnitt der Schienenmessstrecke wirkenden Kräfte und/oder Momente, die beim Belasten durch das Schienenfahrzeug entstehen, mittels der Anzahl von Messvorrichtungen; und
- Auswerten der von den Messvorrichtungen gelieferten elektrischen Messsignale, um daraus die Lage des Masseschwerpunkts des Schienenfahrzeugs zu ermitteln.

12. Verfahren nach Anspruch 8, wobei mindestens zwei Messungen vorgenommen werden umfassend die folgenden Schritte:

• Einstellen des Höhenniveaus der einen Schiene auf dasselbe Höhenniveau der anderen Schiene der Schienenmessstrecke, so dass beide Schienen der Schienenmessstrecke im Wesentlichen in einer horizontalen Ebene liegen;
• Belasten der Schienenmessstrecke mit dem Gewicht des Schienenfahrzeugs;
• Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen;
• Einstellen der einen Schiene auf ein Höhenniveau, das gegenüber der anderen Schiene unterschiedlich ist;

• Belasten der Schienenmessstrecke mit dem Gewicht des Schienenfahrzeugs;
• Erfassen der an der Schienenmessstrecke wirkenden Kräfte und/oder Momente, die beim Belasten der Schienenmessstrecke durch das Schienenfahrzeug entstehen, mittels der Anzahl von Messvorrichtungen; und
• Auswerten der von den Messvorrichtungen gelieferten elektrischen Messsignale, um daraus die Lage des Masseschwerpunkts des Schienenfahrzeugs zu ermitteln.

**13.** Verfahren nach einem der Ansprüche 8 bis 12, ferner umfassend die Schritte:

▪ Mathematisches Korrelieren und/oder Auswerten der von den Messvorrichtungen gelieferten elektrischen Messsignale, um daraus die räumliche Lage des Masseschwerpunkts des Schienenfahrzeugs zu ermitteln.

**14.** Verfahren nach einem der Ansprüche 8 bis 13, wobei das Erfassen der Kräfte und/oder Momente in der Schienenmessstrecke an beiden Schienen der Schienenmessstrecke gleichzeitig vorgenommen wird und/oder
wobei das Belasten der Schienenmessstrecke mit dem Gewicht des Schienenfahrzeugs durch Überfahren der Schienenmessstrecke mit dem Schienenfahrzeug erfolgt und/oder durch die Gewichtsbelastung des ruhenden Schienenfahrzeugs, das auf der Schienenmessstrecke abgestellt ist.

**Claims**

**1.** System for determining the position of the centre of gravity of rail vehicles within a rail measuring section having two rails, wherein a number of measuring devices are provided for detecting the forces and/or torques acting on the rails of the rail measuring section, **characterized**
**in that** the height level of one rail compared to the height level of the other rail of the rail measuring section is different due to rail alignment within the rail measuring section and/or that the height level is changeable by motor drive.

**2.** System according to one of the preceding claims, wherein

• in a first section of the rail measuring section the height level of one rail is arranged and/or settable to a first height level compared to the other rail, and
• in a second section of the rail measuring section the height level of one rail is arranged and/or settable to a second height level compared to the other rail, wherein the first height level differs from the second height level.

**3.** System according to one of the preceding claims, wherein

• both the height level of one rail of the rail measuring section is settable to the same height level of the other rail of the rail measuring section with the result that both rails of the rail measuring section lie essentially in a horizontal plane,
• and the height level of one rail of the rail measuring section is settable to a height level which differs from the other rail of the rail measuring section, with the result that the two rails of the rail measuring section do not lie in a horizontal plane but rather at a different height level.

**4.** System according to one of the preceding claims, wherein the height levels of the rails are arranged and/or settable at a specific angle of inclination with respect to one another, transversely with respect to the longitudinal direction of the rail measuring section,
and/or
wherein the rails of the rail measuring section are arranged and/or settable jointly or separately in each case at a specific angle of inclination in the longitudinal direction of the rail measuring section, and/or
wherein the measuring devices for detecting the forces or torques acting on the rails of the rail measuring section are arranged under a rail foot, between the rail foot and the rail bed and/or integrated into the rail,
and/or
wherein measuring appliances for detecting the forces and/or torques acting on the rails in the perpendicular direction and/or in the horizontal direction are provided.

**5.** System according to one of the preceding claims, wherein in addition electronic means are provided which evaluate the electrical measurement signals from the measuring devices, in order to determine therefrom the position of the centre of gravity of the rail vehicle.

6. System according to the preceding claim, wherein the electronic means are designed to correlate with one another the measurement signals supplied by the measuring devices and/or to process them mathematically in order to determine therefrom the position of the centre of gravity of the rail vehicle.

7. System according to one of the preceding claims, wherein the system with the rail measuring section is integratable into a real track body for rail vehicles.

8. Method for determining the position of the centre of gravity of rail vehicles by means of a rail measuring section having two rails, comprising the following steps:

   • setting one rail to a height level which is different compared to the other rail, by corresponding rail alignment within the rail measuring section and/or by motor drive;
   • loading the rail measuring section with the weight of the rail vehicle;
   • detecting the forces and/or torques which act on the rail measuring section and which are produced during the loading of the rail measuring section by the rail vehicle, by means of the number of measuring devices; and
   • evaluating the electrical measurement signals supplied by the measuring devices, in order to determine therefrom the position of the centre of gravity of the rail vehicle.

9. Method according to Claim 8, wherein at least two measurements are carried out, comprising the following steps:

   • arranging one rail at a height level which is different compared to the other rail;
   • loading the rail measuring section with the weight of the rail vehicle in a first orientation and/or direction of travel;
   • detecting the forces and/or torques which act on the rail measuring section and which are produced during the loading of the rail measuring section by the rail vehicle, by means of the number of measuring devices;
   • loading the rail measuring section with the weight of the rail vehicle, wherein the rail vehicle loads the rail measuring section in an orientation and/or direction of travel which is opposed to the first orientation and/or direction of travel;
   • detecting the forces and/or torques which act on the rail measuring section and which are produced during the loading of the rail measuring section by the rail vehicle, by means of the number of measuring devices; and
   • evaluating the electrical measurement signals supplied by the measuring devices, in order to determine therefrom the position of the centre of gravity of the rail vehicle.

10. Method according to Claim 8, wherein at least two measurements are carried out, comprising the following steps:

   • setting one rail to a first height level which is different compared to the other rail;
   • loading the rail measuring section with the weight of the rail vehicle;
   • detecting the forces and/or torques which act on the rail measuring section and which are produced during the loading of the rail measuring section by the rail vehicle, by means of the number of measuring devices;
   • setting one rail to a second height level which differs from the first height level and is different compared to the height level of the other rail;
   • loading the rail measuring section with the weight of the rail vehicle;
   • detecting the forces and/or torques which act on the rail measuring section and which are produced during the loading of the rail measuring section by the rail vehicle, by means of the number of measuring devices; and
   • evaluating the electrical measurement signals supplied by the measuring devices, in order to determine therefrom the position of the centre of gravity of the rail vehicle.

11. Method according to Claim 8, wherein at least two measurements are carried out, comprising the following steps:

   • loading the rail measuring section by the rail vehicle in a first section of the rail measuring section in which one rail is located at a first height level compared to the other rail of the rail measuring section;
   • detecting the forces and/or torques which act on the first section of the rail measuring section and which are produced during the loading by the rail vehicle, by means of the number of measuring devices;
   • loading the rail measuring section by the rail vehicle in a second section of the rail measuring section, in which one rail is located at a second height level compared to the other rail of the rail measuring section, which second height level differs from the first height level;

• detecting the forces and/or torques which act on the second section of the rail measuring section and which are produced during the loading by the rail vehicle, by means of the number of measuring devices; and
• evaluating the electrical measurement signals supplied by the measuring devices, in order to determine therefrom the position of the centre of gravity of the rail vehicle.

12. Method according to Claim 8, wherein at least two measurements are carried out, comprising the following steps:

• setting the height level of one rail to the same height level as the other rail of the rail measuring section, with the result that both rails of the rail measuring section lie essentially in a horizontal plane;
• loading the rail measuring section with the weight of the rail vehicle;
• detecting the forces and/or torques which act on the rail measuring section and which are produced during the loading of the rail measuring section by the rail vehicle, by means of the number of measuring devices;
• setting one rail to a height level which is different compared to the other rail;
• loading the rail measuring section with the weight of the rail vehicle;
• detecting the forces and/or torques which act on the rail measuring section and which are produced during the loading of the rail measuring section by the rail vehicle, by means of the number of measuring devices; and
• evaluating the electrical measurement signals supplied by the measuring devices, in order to determine therefrom the position of the centre of gravity of the rail vehicle.

13. Method according to one of Claims 8 to 12, also comprising the steps:

• mathematically correlating and/or evaluating the electrical measurement signals supplied by the measuring devices, in order to determine therefrom the spatial position of the centre of gravity of the rail vehicle.

14. Method according to one of Claims 8 to 13, wherein the detection of the forces and/or torques in the rail measuring section is carried out simultaneously on both rails of the rail measuring section,
and/or wherein the loading of the rail measuring section with the weight of the rail vehicle is carried out by travelling over the rail measuring section with the rail vehicle and/or by means of the loading with weight of the stationary rail vehicle which is parked on the rail measuring section.

**Revendications**

1. Système de détermination de la position du centre de masse de véhicules ferroviaires, dans lequel un certain nombre de dispositifs de mesure destinés à détecter les forces et/ou les moments agissant sur les rails de la section de mesure de rail est prévu sur une section de mesure de rail comprenant deux rails, **caractérisé en ce que** le niveau de l'un des rails par rapport au niveau de l'autre rail de la section de mesure de rail diffère en guidant de manière correspondante les rails les rails à l'intérieur de la section de mesure de rail et/ou est modifiable par entraînement motorisé.

2. Système selon l'une quelconque des revendications précédentes, dans lequel :

- dans une première partie de la section de mesure de rail, le niveau de l'un des rails est disposé et/ou peut être réglé à un premier niveau par rapport à l'autre rail, et
- dans une seconde partie de la section de mesure de rail, le niveau de l'un des rails est disposé et/ou peut être réglé à un second niveau par rapport à l'autre rail, dans lequel le premier niveau diffère du second niveau.

3. Système selon l'une quelconque des revendications précédentes, dans lequel :

- le niveau de l'un des rails de la section de mesure de rail peut être réglé au même niveau que l'autre rail de la section de mesure de rail, de manière à ce que les deux rails de la section de mesure de rail se situent sensiblement dans un plan horizontal,
- et le niveau de l'un des rails de la section de mesure de rail peut être réglé à un niveau s'écartant de l'autre rail de la section de mesure de rail, de manière à ce que les deux rails de la section de mesure de rail ne se situent pas dans un plan horizontal mais à un niveau différent.

4. Système selon l'une quelconque des revendications précédentes dans lequel les niveaux des rails sont disposés et/ou peuvent être réglés avec un angle d'inclinaison déterminé l'un par rapport à l'autre transversalement à la direction longitudinale de la section de mesure de rail, et/ou

dans lequel les rails de la section de mesure de rail sont disposés et/ou peuvent être réglés respectivement de manière séparée avec un angle d'inclinaison déterminé dans la direction longitudinale de la section de mesure de rail, et/ou

dans lequel les dispositifs de mesure destinés à détecter les forces ou les moments mis en jeu sur les rails de la section de mesure de rail sont disposés en dessous d'un patin de rail, entre le patin de rail et l'assiette du rail et/ou de manière intégrée au rail, et/ou

dans lequel il est prévu des appareils de mesure destinés à détecter les forces et/ou les moments mis en jeu sur les rails dans la direction verticale et/ou dans la direction horizontale.

5. Système selon l'une quelconque des revendications précédentes, dans lequel il est en outre prévu des moyens électroniques qui évaluent des signaux de mesure électriques provenant des dispositifs de mesure afin d'en déduire la position du centre de masse du véhicule ferroviaire.

6. Système selon la revendication précédente, dans lequel les moyens électroniques sont conçus pour corréler les uns aux autres les signaux de mesure délivrés par les dispositifs de mesure et/ou pour les traiter mathématiquement afin d'en déduire la position du centre de masse du véhicule ferroviaire.

7. Système selon l'une quelconque des revendications précédentes, dans lequel le système peut être intégré à la section de mesure de rail dans une voie ferrée pour véhicules ferroviaires.

8. Procédé de détermination de la position du centre de masse de véhicules ferroviaires au moyen d'une section de mesure de rail comportant deux rails, comprenant les étapes suivantes :

   - régler l'un des rails à un niveau différent de celui de l'autre rail en guidant de manière correspondante les rails à l'intérieur de la section de mesure de rail et/ou par entraînement motorisé ;
   - mettre en charge la section de mesure de rail avec le poids du véhicule ferroviaire ;
   - détecter les forces et/ou les moments agissant sur la section de mesure de rail et apparaissant lors de la mise en charge de la section de mesure de rail par le véhicule ferroviaire, au moyen dudit nombre de dispositifs de mesure ; et
   - évaluer les signaux de mesure électriques délivrés par les dispositifs de mesure afin d'en déduire la position du centre de masse du véhicule ferroviaire.

9. Procédé selon la revendication 8, dans lequel au moins deux mesures sont effectuées, comprenant les étapes suivantes :

   - disposer l'un des rails à un niveau différent de l'autre rail ;
   - mettre en charge la section de mesure de rail avec le poids du véhicule ferroviaire dans une première orientation et/ou direction de déplacement ;
   - détecter les forces et/ou les moments agissant sur la section de mesure de rail et apparaissant lors de la mise en charge de la section de mesure de rail par le véhicule ferroviaire, au moyen dudit nombre de dispositifs de mesure ;
   - mettre en charge la section de mesure de rail avec le poids du véhicule ferroviaire, dans lequel le véhicule ferroviaire exerce une charge sur la section de mesure de rail dans une orientation et/ou direction de déplacement réglées de manière opposée à la première orientation et/ou direction de déplacement ;
   - détecter les forces et/ou les moments agissant sur la section de mesure de rail et apparaissant lors de la mise en charge de la section de mesure de rail par le véhicule ferroviaire, au moyen dudit nombre de dispositifs de mesure ; et
   - évaluer les signaux de mesure électriques délivrés par les dispositifs de mesure afin d'en déduire la position du centre de masse du véhicule ferroviaire.

10. Procédé selon la revendication 8, dans lequel au moins deux mesures sont effectuées, comprenant les étapes suivantes :

   - régler l'un des rails à un premier niveau qui est différent de celui de l'autre rail ;
   - mettre en charge la section de mesure de rail avec le poids du véhicule ferroviaire ;
   - détecter les forces et/ou les moments agissant sur la section de mesure de rail et apparaissant lors de la mise en charge de la section de mesure de rail par le véhicule ferroviaire, au moyen dudit nombre de dispositifs de mesure ;
- régler l'un des rails à un second niveau qui est différent du premier niveau et est différent de celui de l'autre rail ;
- mettre en charge la section de mesure de rail avec le poids du véhicule ferroviaire ;
- détecter les forces et/ou les moments agissant sur la section de mesure de rail et apparaissant lors de la mise en charge de la section de mesure de rail par le véhicule ferroviaire, au moyen dudit nombre de dispositifs de mesure ; et
- évaluer les signaux de mesure électriques délivrés par les dispositifs de mesure afin d'en déduire la position du centre de masse du véhicule ferroviaire.

11. Procédé selon la revendication 8, dans lequel au moins deux mesures sont effectuées, comprenant les étapes suivantes :

- mettre en charge la section de mesure de rail au moyen du véhicule ferroviaire dans une première partie de la section de mesure de rail dans laquelle l'un des rails se trouve à un premier niveau par rapport à l'autre rail de la section de mesure de rail ;
- détecter les forces et/ou les moments agissant sur la première partie de la section de mesure de rail et apparaissant lors de la mise en charge par le véhicule ferroviaire, au moyen dudit nombre de dispositifs de mesure ;
- mettre en charge la section de mesure de rail au moyen du véhicule ferroviaire dans une seconde partie de la section de mesure de rail dans laquelle l'un des rails se trouve à un second niveau qui diffère du premier niveau par rapport à l'autre rail de la section de mesure de rail ;
- détecter les forces et/ou les moments agissant sur la seconde partie de la section de mesure de rail et apparaissant lors de la mise en charge par le véhicule ferroviaire, au moyen dudit nombre de dispositifs de mesure ; et
- évaluer les signaux de mesure électriques délivrés par les dispositifs de mesure afin d'en déduire la position du centre de masse du véhicule ferroviaire.

12. Procédé selon la revendication 8, dans lequel au moins deux mesures sont effectuées, comprenant les étapes suivantes :

- régler le niveau de l'un des rails au même niveau que l'autre rail de la section de mesure de rail, de manière à ce que les deux rails de la section de mesure de rail se situent sensiblement dans un plan horizontal ;
- mettre en charge la section de mesure de rail avec le poids du véhicule ferroviaire ;
- détecter les forces et/ou les moments agissant sur la section de mesure de rail et apparaissant lors de la mise en charge de la section de mesure de rail par le véhicule ferroviaire, au moyen dudit nombre de dispositifs de mesure ;
- régler l'un des rails à un niveau qui est différent de celui de l'autre rail ;
- mettre en charge la section de mesure de rail avec le poids du véhicule ferroviaire ;
- détecter les forces et/ou les moments agissant sur la section de mesure de rail et apparaissant lors de la mise en charge de la section de mesure de rail par le véhicule ferroviaire, au moyen dudit nombre de dispositifs de mesure ; et
- évaluer les signaux de mesure électriques délivrés par les dispositifs de mesure afin d'en déduire la position du centre de masse du véhicule ferroviaire.

13. Procédé selon l'une quelconque des revendications 8 à 12, comprenant en outre les étapes suivantes :

- corréler mathématiquement et/ou évaluer les signaux de mesure électriques délivrés par les dispositifs de mesure afin d'en déduire la position spatiale du centre de masse du véhicule ferroviaire.

14. Procédé selon l'une quelconque des revendications 8 à 13, dans lequel la détection des forces et/ou des moments dans la section de mesure de rail sur les deux rails de la section de mesure de rail sont effectuées simultanément et/ou dans lequel la mise en charge de la section de mesure
de rail avec le poids du véhicule ferroviaire s'effectue en faisant rouler le véhicule ferroviaire sur la section de mesure de rail, et/ou par mise en charge sous l'effet du poids du véhicule ferroviaire au repos qui est parqué sur la section de mesure de rail,

EP 2 378 263 B1

**Figur 1**

$$\frac{m \cdot g}{2}$$

$$\frac{m \cdot g}{2}$$

m

h

$$\frac{a}{2}$$

$$\frac{a}{2}$$

$$M_L = \frac{m \cdot g \cdot a}{2}$$

$$M_R = \frac{m \cdot g \cdot a}{2}$$

Figur 2

EP 2 378 263 B1

**Figur 3**

$$W_L^{\cdot} = \frac{M_R}{a \cdot \cos\alpha}$$

$$W_R^{\cdot} = \frac{M_L}{a \cdot \cos\alpha}$$

$a$

$\alpha$

$a \cdot \cos\alpha$

$M_L$

$M_R$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006015924 A1
- WO 8806720 A1
- EP 1607726 A1
- DE 3937318 A1